# EUROPÄISCHE PATENTANMELDUNG

(11) **EP 2 015 590 A2**
(43) Veröffentlichungstag der Anmeldung: **14.01.2009**
(21) Anmeldenummer: 08010769.1
(22) Anmeldetag: 13.06.2008
(51) Int. Cl.: H04Q 1/14

(54) **Verteilerleiste einer Telekommunikationsanlage**

(30) Priorität: 09.07.2007 DE 202007009623 U
(71) Anmelder: CCS Technology, Inc., Wilmington, DE 19803 (US)
(72) Erfinder: Breuer-Heckel, Mike, Dipl.-Ing., 44143 Dortmund (DE); Badura, Stefan, Dipl.-Ing., 58708 Menden (DE); Matthies, Jürgen, Dipl.-Ing., 58300 Wetter (Ruhr) (DE); Hoffmann, Wolfgang, Dr.-Ing., 58097 Hagen (DE)
(74) Vertreter: Sturm, Christoph

(57) **Zusammenfassung**

Die Erfindung betrifft eine Verteilerleiste (10) einer Telekommunikationsanlage, mit mehreren als Durchgangskontakte (12) ausgebildeten Kontaktteilen, die in vorzugsweise zwei übereinander angeordneten Reihen aus jeweils mehreren nebeneinander angeordneten Durchgangskontakten positioniert sind, wobei jeder Durchgangskontakt (12) an einer Rückseite der Verteilerleiste (10) ein vorzugsweise als IDC-Kontakt ausgebildetes rückseitiges Anschlusselement (14) zum Anschluss von Kabeladern eines Teilnehmerkabels oder Systemkabels und an einer Vorderseite der Verteilerleiste (10) ein vorzugsweise als IDC-Kontakt ausgebildetes frontseitiges Anschlusselement (16) zum Anschluss von Kabeladern eines Rangierkabels aufweist, und wobei zwischen mindestens zwei übereinander positionierten Durchgangskontakten (12) eine Überspannungsschutzeinrichtung oder eine Messeinrichtung derart einführbar ist, dass die Überspannungsschutzeinrichtung oder die Messeinrichtung mit mindestens einem der jeweils übereinander positionierten Durchgangskontakte (12) elektrisch leitend kontaktiert ist.

## Beschreibung

Die Erfindung betrifft eine Verteilerleiste einer Telekommunikationsanlage.

In der Telekommunikationstechnik kommen Verteilerleisten zum Einsatz, um Kabeladern sogenannter Teilnehmerkabel und/oder Systemkabel und/oder Rangierkabel anzuschließen. Verteilerleisten werden auch als Funktionselemente bezeichnet.

Aus der EP 0 852 881 B1 ist ein Verteilerblock einer Telekommunikationsanlage bekannt, der mehrere Verteilerleisten aufweist. Jede der dort offenbarten Verteilerleisten verfügt über mehrere Kontaktteile, die in einer Reihe nebeneinander positioniert sind. Nach der EP 0 852 881 B1 sind die Kontaktteile entweder als Trennkontakte oder als Durchgangskontakte ausgeführt, wobei Durchgangskontakte keine Unterbrechungsmöglichkeit aufweisen. Die Durchgangskontakte weisen an einer Rückseite der Verteilerleiste ein rückseitiges Anschlusselement zum Anschluss von Kabeladern eines Teilnehmerkabels oder eines Systemkabels und an einer Vorderseite der Verteilerleiste ein frontseitiges Anschlusselement zum Anschluss von Kabeladern eines Rangierkabels auf. Bei den frontseitigen Anschlusselementen sowie rückseitigen Anschlusselementen handelt es sich vorzugsweise um sogenannte IDC-Kontakte.

Aus der EP 1 744 404 A1 ist eine weitere Verteilerleiste einer Telekommünikationsanlage bekannt, die mehrere in einer Reihe nebeneinander angeordnete, als Durchgangskontakte ausgebildete Kontaktteile umfasst, wobei jedes Kontaktteil ein frontseitiges Anschlusselement sowie ein rückseitiges Anschlusselement aufweist. Bei den Anschlusselementen der Kontaktteile handelt es sich wiederum um IDC-Kontakte.

Bei solchen Verteilerleisten, die als Durchgangskontakte ausgebildete Kontaktteile aufweisen, ist es bislang nicht möglich, eine Überspannungsschutzeinrichtung oder eine Messeinrichtung mit einem Durchgangskontakt definiert zu kontaktieren.

Hiervon ausgehend liegt der vorliegenden Erfindung das Problem zu Grunde, eine neuartige Verteilerleiste einer Telekommunikationsanlage zu schaffen.

Dieses Problem wird durch eine Verteilerleiste einer Telekommunikationsanlage gemäß Anspruch 1 gelöst. Die erfindungsgemäße Verteilerleiste weist mehrere als Durchgangskontakte ausgebildete Kontaktteile auf, die in vorzugsweise zwei übereinander angeordneten Reihen aus jeweils mehreren nebeneinander angeordneten Durchgangskontakten positioniert sind, wobei jeder Durchgangskontakt an einer Rückseite der Verteilerleiste ein vorzugsweise als IDC-Kontakt ausgebildetes rückseitiges Anschlusselement zum Anschluss von Kabeladem eines Teilnehmerkabeis oder Systemkabels und an einer Vorderseite der Verteilerleiste ein vorzugsweise als IDC-Kontakt ausgebildetes frontseitiges Anschlusselement zum Anschluss von Kabeladern eines Rangierkabels aufweist, und wobei zwischen mindestens zwei übereinander positionierten Durchgangskontakten eine Überspannungsschutzeinrichtung oder eine Messeinrichtung derart einführbar ist, dass die Überspannungsschutzeinrichtung oder die Messeinrichtung mit mindestens einem der jeweils übereinander positionierten Durchgangskontakte elektrisch leitend kontaktiert ist.

Mit der hier vorliegenden Erfindung wird erstmals eine Verteilerleiste einer Telekommunikationsanlage vorgeschlagen, mit deren als Durchgangskontakte ausgebildeten Kontaktteilen eine Überspannungsschutzeinrichtung oder eine Messeinrichtung definiert, nämlich an einer definierten Position, elektrisch leitend kontaktiert werden kann.

Die Durchgangskontakte der Verteilerleiste sind hierzu in zwei übereinander angeordneten Reihen aus jeweils mehreren nebeneinander angeordneten Durchgangskontakten positioniert, wobei zwischen mindestens zwei übereinander positionierten Durchgangskontakten eine Überspannungsschutzeinrichtung oder eine Messeinrichtung einführbar ist, die dann mit mindestens einem der jeweils übereinander positionierten Durchgangskontakte elektrisch leitend kontaktiert ist.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1: eine erfindungsgemäße Verteilerleiste einer Telekommunikationsanlage zusammen mit Drahtführungselementen in einer perspektivischen Vorderansicht;
- Fig. 2: die Anordnung der Fig. 1 in einer Draufsicht; und
- Fig. 3: einen Querschnitt durch die Anordnung der Fig. 1 und 2.

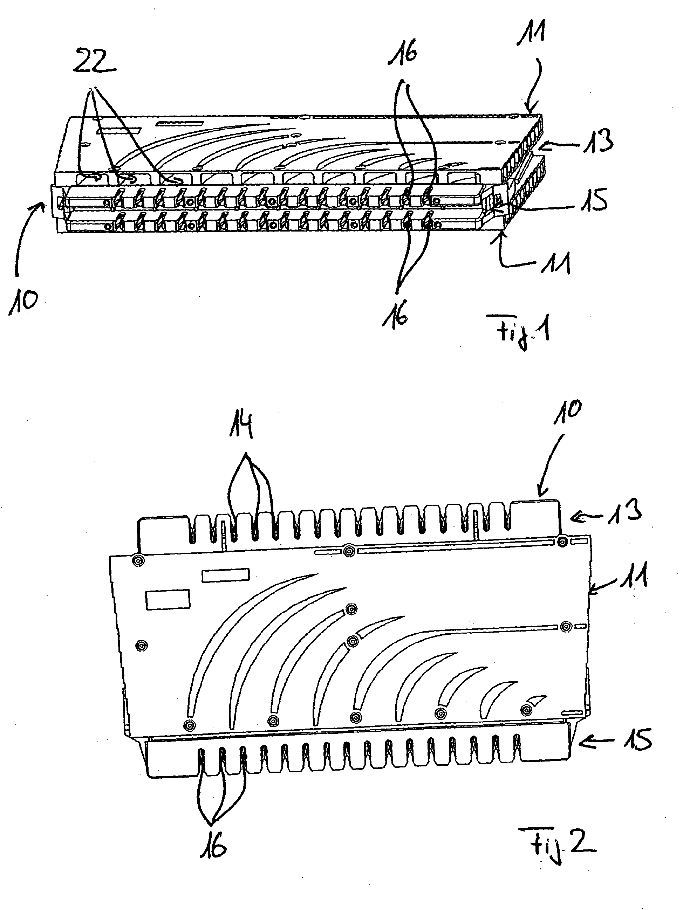

Fig. 1 und 2 zeigen eine perspektivische Ansicht einer erfindungsgemäßen Verteilerleiste 10, wobei oberhalb und unterhalb der Verteilerleiste 10 jeweils ein Drahtführungselement 11 positioniert ist.

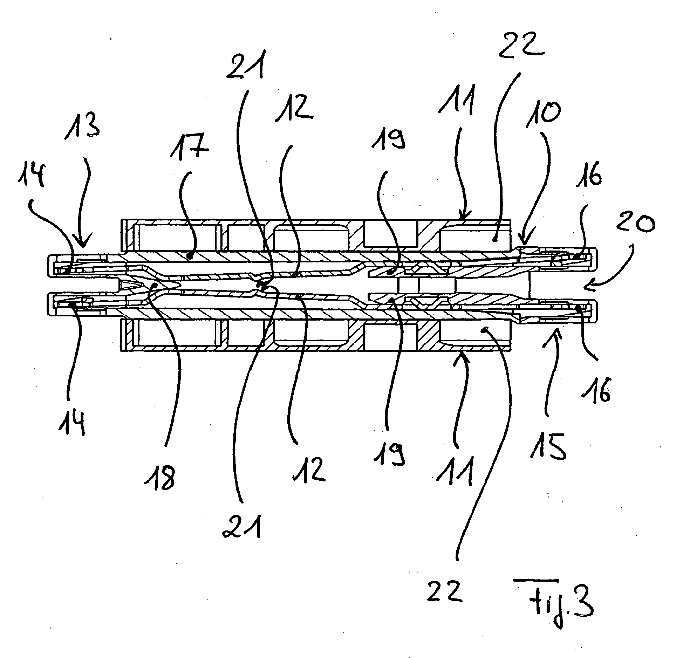

Die Verteilerleiste 10 verfügt über mehrere als Durchgangskontakte 12 (siehe Fig. 3) ausgebildete Kontaktteile, wobei jeder Durchgangskontakt 12 an einer Rückseite 13 der Verteilerleiste 10 ein rückseitiges Anschlusselement 14 und an einer Vorderseite 15 der Verteilerleiste 10 ein frontseitiges Anschlusselement 16 aufweist. An der Vorderseite 15 der Verteilerleiste 10 sind demnach zwei übereinander angeordnete Reihen aus jeweils mehreren nebeneinander angeordneten, frontseitigen Anschlusselementen 16 ausgebildet.

An der Rückseite 13 der Verteilerleiste 10 sind zwei übereinander angeordnete Reihen aus mehreren nebeneinander angeordneten, rückseitigen Anschlusselementen 14 ausgebildet. Sowohl bei den frontseitigen Anschlusselementen 16 als auch bei den rückseitigen Anschlusselementen 14 handelt es sich um IDC-Kontakte.

Sämtliche als Durchgangskontakte 12 ausgebildeten Kontaktteile einer Verteilerleiste 10 finden in einem gemeinsamen Gehäuse 17 der Verteilerleiste 10 Aufnahme, wobei jeder einzelne Durchgangskontakt 12 gegenüber den anderen Durchgangskontakten 12 elektrisch isoliert im Gehäuse 17 der Verteilerleiste 10 positioniert ist. Über Vorsprünge 18, 19 des Gehäuses 10, die sich abschnittsweise zwischen übereinander positionierten Durchgangskontakten 12 der Verteilerleiste 10 erstrecken, wird gewährleistet, dass sich übereinander positionierte Durchgangskontakte 12 nicht berühren und demnach gegeneinander elektrisch isoliert sind.

Zwischen übereinander positionierten Durchgangskontakte 12 ist eine nichtdargestellte Überspannungsschutzeinrichtung oder eine ebenfalls nichtdargestellte Messeinrichtung derart einführbar, dass entweder die Überspannungsschutzeinrichtung oder die Messeinrichtung mit mindestens einem der übereinander positionierten Durchgangskontakte 12 elektrisch leitend kontaktiert ist.

Gemäß Fig. 3 ist eine solche Überspannungsschutzeinrichtung bzw. Messeinrichtung von der Vorderseite 15 der Verteilerleiste 10 aus über einen entsprechenden Einführkanal 20 zwischen übereinander positionierte Durchgangskontakte 12 einführbar, wobei dann die eingeführte Überspannungsschutzeinrichtung bzw. Messeinrichtung vorzugsweise mit beiden übereinander positionierten Durchgangskontakten 12 elektrisch leitend kontaktiert ist.

Zur definierten elektrischen Kontaktierung der Durchgangskontakte 12 mit einer in die Verteilerleiste 10 einzuschiebenden Überspannungsschutzeinrichtung bzw. Messeinrichtung dienen Vorsprünge 21 der Durchgangskontakte 12, die in einem mittleren Abschnitt derselben zwischen dem rückseitigen Anschlusselement 14 und dem frontseitigen Anschlusselement 16 der jeweiligen Durchgangskontakte 12 ausgebildet sind. Die Vorsprünge 21 bilden definierte Kontaktpunkte aus, die der elektrischen Kontaktierung der Überspannungsschutzeinrichtung oder der Messeinrichtung mit den Durchgangskontakten dienen.

Wie Fig. 3 entnommen werden kann, sind die Vorsprünge 21 übereinander positionierte Durchgangskontakte 12 einander zugewandt, so dass nach Einführung einer Messeinrichtung oder einer Überspannungsschutzeinrichtung zwischen die Vorsprünge 21 der Durchgangskontakte 12 eine sichere, definierte elektrische Kontaktierung der Durchgangskontakte 12 mit einem entsprechenden Abschnitt der Messeinrichtung über Überspannungsschutzeinrichtung gewährleistet ist.

Die rückseitigen Anschlusselemente 14 der Durchgangskontakte 12 dienen dem Anschließen von Kabeladern eines Teilnehmerkabels oder Systemkabels. Die frontseitigen Anschlusselemente 16 der Durchgangskontakte 12 dienen hingegen dem Anschließen von Kabeladern von Rangierkabel. Die Kabeladern der Rangierkabel können über Drahtführungskanäle 22 der Drahtführungselemente den frontseitigen Anschlusselementen 16 zugeführt werden.

Über eine Messeinrichtung ist es möglich, die von den Durchgangskontakten 12 zu übertragenden Signale abzugreifen und zu Testzwecken auszuwerten.

### Bezugszeichenliste

- 10: Verteilerleiste
- 11: Drahtführungselement
- 12: Durchgangskontakt
- 13: Rückseite
- 14: rückseitiges Anschlusselement
- 15: Vorderseite
- 16: frontseitiges Anschlusselement
- 17: Gehäuse
- 18: Vorsprung
- 19: Vorsprung
- 20: Einführkanal
- 21: Vorsprung
- 22: Drahtführungskanal

## Patentansprüche

1. Verteilerleiste (10) einer Telekommunikationsanlage, mit mehreren als Durchgangskontakte (12) ausgebildeten Kontaktteilen, die in vorzugsweise zwei übereinander angeordneten Reihen aus jeweils mehreren nebeneinander angeordneten Durchgangskontakten positioniert sind, wobei jeder Durchgangskontakt (12) an einer Rückseite der Verteilerleiste ein vorzugsweise als IDC-Kontakt ausgebildetes rückseitiges Anschlusselement (14) zum Anschluss von Kabeladern eines Teilnehmerkabels oder Systemkabels und an einer Vorderseite der Verteilerleiste ein vorzugsweise als IDC-Kontakt ausgebildetes frontseitiges Anschlusselement (16) zum Anschluss von Kabeladern eines Rangierkabels aufweist, und wobei zwischen mindestens zwei übereinander positionierten Durchgangskontakten (12) eine Überspannungsschutzeinrichtung oder eine Messeinrichtung derart einführbar ist, dass die Überspannungsschutzeinrichtung oder die Messeinrichtung mit mindestens einem der jeweils übereinander positionierten Durchgangskontakte (12) elektrisch leitend kontaktiert ist.

2. Verteilerleiste nach Anspruch 1, **dadurch gekennzeichnet, dass** die Überspannungsschutzeinrichtung oder die Messeinrichtung derart zwischen mindestens zwei übereinander positionierten Durchgangskontakten (12) einführbar ist, dass die Überspannungsschutzeinrichtung oder die Messeinrichtung mit beiden der jeweils übereinander positionierten Durchgangskontakten (12) elektrisch leitend kontaktiert ist.

3. Verteilerleiste nach Anspruch 1 oder 2, **dadurch gekennzeichnet, dass** jeder der übereinander positionierten Durchgangskontakte (12) in einem mittleren Abschnitt zwischen dem rückseitigen Anschlusselement (14) und dem frontseitigen Anschlusselement (16) einen Vorsprung (21) aufweist, mit dem die Überspannungsschutzeinrichtung oder die Messeinrichtung dann kontaktierbar ist, wenn dieselben zwischen die übereinander positionierten Durchgangskontakte (12) eingeschoben ist.

4. Verteilerleiste nach Anspruch 3, **dadurch gekennzeichnet, dass** die Vorsprünge (21) übereinander positionierter Durchgangskontakte (12) einander zugewandt sind.

5. Verteilerleiste nach Anspruch 3 oder 4, **dadurch gekennzeichnet, dass** die Vorsprünge (21) definierte Kontaktpunkte bilden, die der Kontaktierung der Überspannungsschutzeinrichtung oder der Messeinrichtung mit den Durchgangskontakten (12) dienen.
